# EUROPÄISCHE PATENTANMELDUNG

(11) **EP 1 598 684 A2**
(43) Veröffentlichungstag der Anmeldung: **23.11.2005**
(21) Anmeldenummer: 05006688.5
(22) Anmeldetag: 26.03.2005
(51) Int. Cl.: G02B 6/38

(54) **An einem zugverstärkten Kabel montierte Steckeranordnung**

(30) Priorität: 21.05.2004 DE 102004025511
(71) Anmelder: Neutrik Aktiengesellschaft, 9494 Schaan (LI)
(72) Erfinder: Dobler, Oliver, 6774 Tschagguns (AT); Kunkel, Peter, 9495 Triesen (LI)
(74) Vertreter: Hefel, Herbert

(57) **Zusammenfassung**

Eine an einem zugverstärkten Kabel (1), welches innerhalb eines Kabelmantels (2) mindestens eine Kabelader (3) sowie Zugelemente (6) aufweist, montierte Steckeranordnung weist ein ein vorderes Gehäuseteil (7) und eine Spannhülse (8) umfassendes Gehäuse und eine Zugentlastungseinrichtung auf, die mit den Zugelementen (6) des Kabels (1) zusammenwirkt. Die Steckeranordnung weist ein auf den Kabelmantel (2) aufgesetztes Klemmglied (14) auf, welches eine zur zentralen Längsachse (11) des Gehäuses geneigte äußere Spannfläche (17) aufweist, die mit einer gleichsinnig zur zentralen Längsachse (11) des Gehäuses geneigten inneren Spannfläche (18) der Spannhülse (8) zur Anpressung des Klemmgliedes (14) an den Kabelmantel (2) zusammenwirkt. Die aus dem Ende des Kabelmantels (2) herausstehenden Zugelemente (6) des Kabels (1) sind um das vordere Ende des Klemmgliedes (14) umgelegt und erstrecken sich anschließend an diese Umlenkung entlang einer vorderen Außenfläche (23) des Klemmgliedes (14) nach hinten, wobei die Zugelemente (6) in einem auf die Umlenkung um das vordere Ende des Klemmgliedes (14) folgenden Abschnitt ihres Verlaufs zumindest an einer Stelle zwischen zwei Teilen der Steckeranordnung geklemmt sind.

## Beschreibung

Die Erfindung betrifft ein an einem zugverstärkten Kabel, welches innerhalb eines Kabelmantels mindestens eine Kabelader sowie Zugelemente aufweist, montierte Steckeranordnung mit einem ein vorderes Gehäuseteil und eine Spannhülse, die mit dem vorderen Gehäuseteil verbunden ist, umfassenden Gehäuse, in das ein Einsatz eingesetzt ist, wobei die Steckeranordnung eine Zugentlastungseinrichtung umfasst, die mit den Zugelementen des Kabels zusammenwirkt.

Zugverstärkte Kabel weisen innerhalb des Kabelmantels liegende, in Längsrichtung des Kabels durchgehende flexible Zugelemente auf, welche eine Zugbelastung des Kabels aufnehmen können. Beispielsweise können diese Zugelemente von durchgehenden Fäden oder Fasern gebildet werden, z. B. aus Kevlar bzw. Aramid, die die Kabeladern in ihrer Gesamtheit umgeben. Solche Zugentlastungsfasern oder-fäden werden auch als "Roving" bezeichnet. Als Zugelemente können auch die Litzen eines die mindestens eine Ader des Kabels umgebenden Litzengeflechts wirken. Ein solches Litzengeflecht kann hierbei gleichzeitig auch die Funktion eines Kabelschirms ausüben.

Eine Zugverstärkung des Kabels mittels von den Kabeladern separaten Zugelementen ist beispielsweise bei Kabeln wesentlich, welche Lichtleiter aufweisen, da solche Lichtleiter gegenüber Zugdehnungen empfindlich sind.

Steckeranordnungen (Kabelstecker), die zum Anschluss an ein solches zugverstärktes Kabel vorgesehen sind, weisen üblicherweise eine Zugentlastungseinrichtung auf, die mit diesen Zugelementen zusammenwirkt. Hierzu werden die nach Entfernung des Endabschnitts des Kabelmantels aus dem Kabelmantel herausragenden Zugelemente über die Außenfläche eines Hülsenteils der Steckeranordnung geführt, wobei sie sich in Richtung zur Vorderseite (=Einsteckseite) der Steckeranordnung erstrecken, d. h. die Enden der Zugelemente sind zum einsteckseitigen Ende der Steckeranordnung gerichtet. Über das vordere Ende des Kabels ist zuvor eine Crimphülse eingefädelt worden, welche nunmehr über das Hülsenteil mit den darüber verlaufenden Zugelementen geschoben wird. In der Folge wird die Crimphülse auf das Hülsenteil mit den dazwischenliegenden Zugelementen aufgecrimpt.

Nachteilig an dieser herkömmlichen Zugentlastung ist es, dass im Falle des Herausziehens von einzelnen Fasern aus der Vercrimpung auch die restlichen Fasern ihren Halt verlieren, wodurch eine wirkungsvolle Zugentlastung nicht mehr gegeben ist. Weiters müssen vor dem Auffädeln des Crimpteils auf das Kabel die über das Ende des Kabelmantels vorstehenden Kabeladern und Zugelemente zuerst relativ eng aneinander angelegt werden, um das Auffädeln der Crimphülse zu ermöglichen, was den Montagevorgang erschwert.

Aufgabe der Erfindung ist es, eine verbesserte mit den Zugelementen eines zugverstärkten Kabels zusammenwirkende Zugentlastungseinrichtung bereitzustellen, durch die eine zuverlässige Aufnahme von auf das Kabel einwirkenden Zugkräften erreicht wird. Erfindungsgemäß gelingt dies durch eine Einrichtung mit den Merkmalen des Anspruchs 1.

Durch die mindestens eine Umlenkung der Zugelemente und ihre Klemmung an zumindest einer Stelle in ihrem auf die Umlenkung folgenden Verlauf wird eine effektive Zugentlastung erreicht. Eine besonders gute Aufnahme der Zugkräfte gibt sich im Falle einer Ausbildung mit zwei Umlenkungen gemäß einer bevorzugten Ausführungsform der Erfindung. Die Erfindung ermöglicht weiters eine einfache Montage. Weiters ermöglicht die Erfindung auch eine effektive Verdrehsicherung des Kabels.

Weitere Vorteile und Einzelheiten der Erfindung werden im Folgenden anhand der beiliegenden Zeichnung erläutert. In dieser zeigen:
- Fig. 1: einen schematischen Längsmittelschnitt durch ein Ausführungsbeispiel einer erfindungsgemäßen Einrichtung;
- die Fig. 2 bis 5: schematische perspektivische Teildarstellungen zur Erläuterung des Montagevorgangs;
- Fig. 6: eine perspektivische Darstellung des von zwei Schalenteilen gebildeten Klemmglieds;
- Fig. 7: einen Längsschnitt durch ein Ausführungsbeispiel, bei dem die Steckeranordnung einen Hybridstecker bildet und das Kabel mindestens einen Lichtleiter aufweist, in einem Schnitt durch eine optische Achse;
- Fig. 8: einen Schnitt entsprechend Fig. 7, in einem nach dem Einstecken in ein (nicht dargestelltes) Steckeraufnahmeteil eingenommenen Zustand;
- Fig. 9: eine perspektivische Darstellung der entlang der Schnittlinie von Fig. 7 und Fig. 8 aufgeschnittenen Anordnung, im Zustand entsprechend Fig. 8.

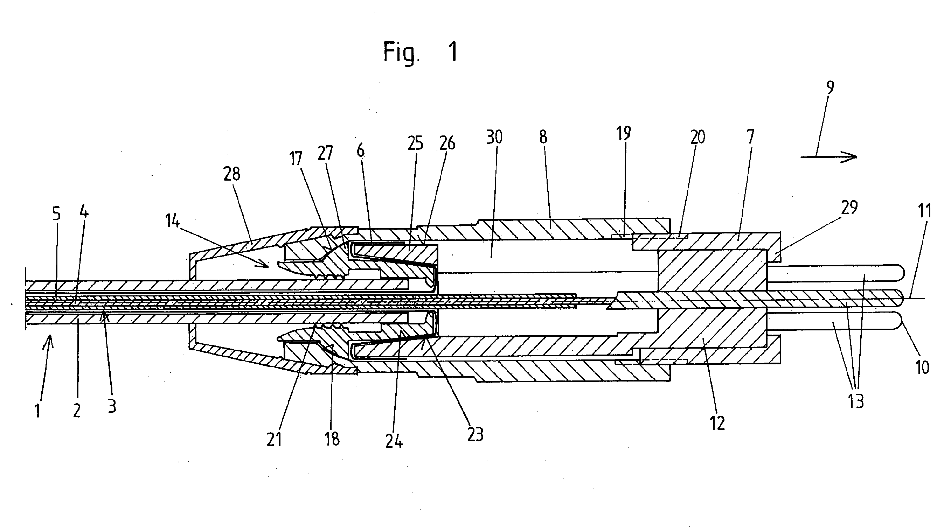

Im Ausführungsbeispiel gemäß den Fig. 1 bis 5 stellt die Steckeranordnung einen elektrischen Kabelstecker dar und das Kabel 1 umfasst ein oder mehrere (im gezeigten Ausführungsbeispiel drei) innerhalb des Kabelmantels 2 verlaufende Kabeladern 3. Die Kabeladern 3 werden jeweils von einem elektrischen Leiter 4 gebildet, der von einer Isolierung 5 umgeben ist. Weiters verlaufen innerhalb des Kabelmantels flexible Zugelemente 6, die im gezeigten Ausführungsbeispiel von Fäden oder Fasern gebildet werden, wobei die Zugelemente 6 von den Kabeladern separate Teile sind.

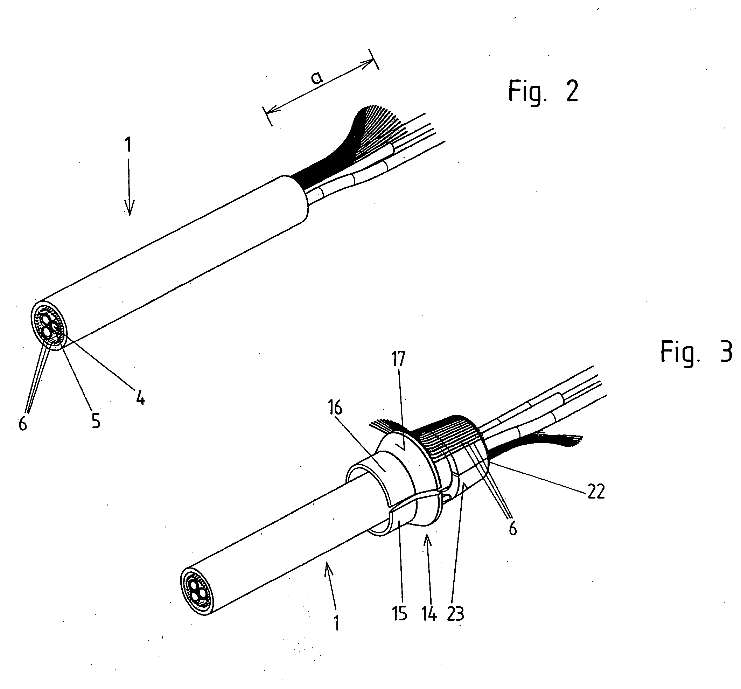

Die Zugelemente 6 sind zwischen dem Kabelmantel 2 und den Kabeladern 3 angeordnet und umgeben die Kabeladern 3 in ihrer Gesamtheit ringförmig. Die Zugelemente 6 verlaufen in Längsrichtung des Kabels oder beispielsweise auch spiralig, wobei eine Spirale mit einer großen Steigung gebildet, um eine Zugsicherung zu erreichen. In den Fig. 2 bis 4 sind die Zugelemente 6 am aufgeschnittenen rückseitigen Ende des Kabels schematisch durch die punktierte Kreislinie dargestellt. Am vorderen Ende des Kabels ist in diesen Fig. 2 bis 4 der Übersichtlichkeit halber nur ein Teil der aus dem Kabelmantel herausragenden Zugelemente eingezeichnet.

Die Steckeranordnung besitzt ein Gehäuse, welches ein vorderes Gehäuseteil 7 und eine auf das vordere Gehäuseteil an seinem rückseitigen Ende aufschraubbare Spannhülse 8 umfasst.

Wenn in dieser Anmeldung im Zusammenhang mit der Steckeranordnung bzw. dem Kabel von "vorne" und "hinten" die Rede ist, so ist dies auf die Einsteckseite bzw. Einsteckrichtung 9 der Steckeranordnung bezogen, d. h. ein weiter vorne liegendes Teil befindet sich näher beim einsteckseitigen Ende 10 der Steckeranordnung als ein weiter hinten liegendes Teil.

Wenn in dieser Anmeldung von "außen" und "innen" die Rede ist, so ist dies auf die Lage relativ zur zentralen Längsmittelachse 11 des Gehäuses bezogen. Ein weiter innen liegendes Teil liegt näher bei der zentralen Längsmittelachse als ein weiter außen liegendes Teil und eine innere Oberfläche ist der zentralen Längsmittelachse 11 zugewandt, während eine äußere Oberfläche von dieser abgewandt ist.

In das Gehäuse ist ein Einsatz 12 eingesetzt, der die elektrischen Kontaktelemente 13 der Steckeranordnung trägt, welche im gezeigten Ausführungsbeispiel von drei Kontaktstiften gebildet werden.

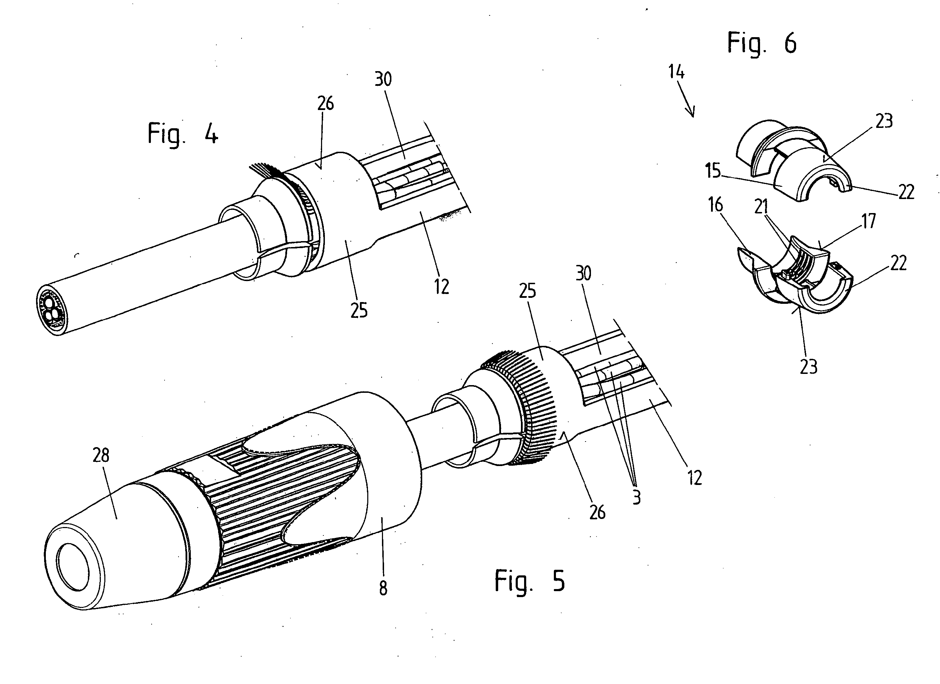

Die Steckeranordnung umfasst eine Zugentlastungseinrichtung, die mit den Zugelementen 6 des Kabels 1 zusammenwirkt. Hierzu ist ein Klemmglied 14 vorhanden, welches im vorderen Endbereich des Kabelmantels 2 auf diesen aufgesetzt ist. Wie insbesondere aus Fig. 6 ersichtlich ist wird das Klemmglied 14 im gezeigten Ausführungsbeispiel von zwei Schalenteilen 15, 16 gebildet, die von gegenüberliegenden Seiten her auf den Kabelmantel aufstetzbar sind und im auf den Kabelmantel aufgesteckten Zustand diesen über den größten Teil seines Umfangs umgeben. In anderen Ausführungsformen der Erfindung könnte das Klemmglied auch in anderer Weise ausgebildet sein, beispielsweise auch mehr als zwei Schalenteile aufweisen, die von unterschiedlichen Seiten her auf das Kabel aufgesetzt werden. Zumindest sollte der Kabelmantel von den Teilen des Klemmgliedes über die Hälfte seines Umfangs umgeben werden, um eine ausreichende Klemmung des Kabels zu erreichen. In bevorzugten Ausführungsformen der Erfindung ist das Klemmglied zum Aufsetzen auf den Kabelmantel umfänglich öffenbar. Anstatt einer Ausbildung in Form von völlig getrennten Teilen wäre dies beispielsweise auch bei einer Verbindung der beiden Schalenteile an jeweils nur einem ihrer Längsränder über ein Filmscharnier denkbar und möglich. In weniger bevorzugten Ausführungsformen der Erfindung, in denen ein nicht umfänglich öffenbares Klemmglied vorgesehen ist, weist das Klemmglied zumindest in einem hinteren Bereich mindestens zwei getrennte, in Umfangsrichtung aufeinanderfolgende und durch Längsschlitze getrennte Abschnitte auf, welche somit zungenartige Abschnitte ausbilden. Das Klemmglied müsste bei einer solchen Ausführung über das freie Ende des Kabels auf dieses aufgefädelt werden.

Das Klemmglied 14 besitzt eine äußere Spannfläche 17, die im Längsschnitt der Steckeranordnung gesehen (Fig. 1) zur zentralen Längsachse 11 des Gehäuses geneigt ist. Diese Spannfläche 17 wirkt mit einer im Längsschnitt der Steckeranordnung gesehen gleichsinnig zur zentralen Längsachse 11 des Gehäuses geneigten inneren Spannfläche 18 der Spannhülse 8 zusammen, um das Klemmglied 14 an den Kabelmantel 2 anzupressen. Hierbei liegen die hinteren Enden der geneigten äußeren Spannfläche 17 und der geneigten inneren Spannfläche 18 näher bei der zentralen Längsachse 11 als deren vorderen Enden und die Neigungswinkel der Spannflächen 17, 18 entprechen einander. Im gezeigten Ausführungsbeispiel werden die äußere und innere Spannfläche 17, 18 von einem Außen- bzw. Innenkonus des Klemmglieds 14 bzw. der Spannhülse 8 gebildet.

Beim Verspannen der Spannhülse 8 gegenüber dem vorderen Gehäuseteil 7, was im gezeigten Ausführungsbeispiel durch das Aufschrauben des Innengewindes 19 der Spannhülse 8 auf das Außengewinde 20 des vorderen Gehäuseteils 7 erfolgt, wird das Klemmglied 14 gegen den Kabelmantel 2 gepresst. Vorteilhafterweise weist hierbei das Klemmglied 14 an seiner Innenfläche nach innen gerichtete Vorsprünge 21 auf, die sich in den Kabelmantel 2 eingraben und die beispielsweise von Zacken gebildet werden.

Das Aufpressen des Klemmglieds 14 auf den Kabelmantel 2 dient hierbei in erster Linie zur Verdrehsicherung des Kabels 1 gegenüber der Steckeranordnung. Zur Zugentlastung werden zumindest auch, vorzugsweise hauptsächlich, die Zugelemente 6 des Kabels 1 herangezogen, wie dies im Folgenden erläutert wird.

Die Zugelemente 6 stehen im an die Steckeranordnung angeschlossenen Zustand des Kabels 1 aus dem vorderen Ende des Kabelmantels 2 heraus. Diese herausstehenden Abschnitte der Zugelemente 6 verlaufen zunächst ausgehend vom Ende des Kabelmantels nach vorne, d. h. in Richtung zum einsteckseitigen Ende 10 des Steckers. Sie sind anschließend an den nach vorne verlaufenden Abschnitt um das vordere Ende 22 des Klemmgliedes 14 herumgelegt und erstrecken sich anschließend an diese Umlenkung nach hinten, wobei sie entlang einer vorderen Außenfläche 23 des Klemmglieds 14 verlaufen. Sie verlaufen hierbei zwischen der vorderen Außenfläche 23 des Klemmglieds 14 und einer Innenfläche 24 eines innerhalb des Gehäuses angeordneten Hülsenteils 25. Im gezeigten Ausführungsbeispiel ist das Hülsenteil 25 einstückig mit dem Einsatz 12 ausgebildet, wobei es einen hinteren Endabschnitt dieses Einsatzes 12 bildet.

Im gezeigten Ausführungsbeispiel ist die vordere Außenfläche 23 des Klemmglieds 14 zur zentralen Längsachse geneigt, wobei sie an ihrem vorderen Ende näher bei der zentralen Längsachse 11 liegt als an ihrem hinteren Ende. Die Innenfläche 24 des Hülsenteils 25 ist gleichsinnig zur Längsachse 11 geneigt, wobei auch die Neigungswinkel einander entsprechen.

Beim Verspannen der Spannhülse 8 gegen das vordere Gehäuseteil 7 wird über die aneinander anliegenden Spannflächen 17, 18 eine nach vorne gerichtete Kraftkomponente auf das Klemmglied 14 ausgeübt, wobei die zwischen der vorderen Außenfläche 23 und der Innenfläche 24 verlaufenden Abschnitte der Zugelemente 6 zwischen diesen Flächen geklemmt werden.

Im gezeigten Ausführungsbeispiel stellt die vordere Außenfläche 23 des Klemmglieds 14 einen Außenkonus dar und die Innenfläche 24 des Hülsenteils 25 bildet einen Innenkonus.

Der Winkel der Umlenkung der Zugelemente 6 um das vordere Ende 22 des Klemmgliedes 14 beträgt mehr als 120°, vorzugsweise mehr als 150°.

Durch die Umlenkung der Zugelemente 6 und ihre Klemmung in einem auf die Umlenkung folgenden Abschnitt wird eine effektive Aufnahme von von den Zugelementen 6 übertragenen Zugkräften erreicht.

Im gezeigten Ausführungsbeispiel sind die Zugelemente 6 anschließend an ihren Verlauf zwischen der vorderen Außenfläche 23 und der Innenfläche 24 um das hintere Ende des Hülsenteils 25 umgelegt und erstrecken sich ausgehend von dieser weiteren Umlenkung entlang der Außenfläche 26 des Hülsenteils 25 nach vorne. Durch diese zweite Umlenkung wird die Zugsicherung der Zugelemente 6 noch verbessert. Vorteilhafterweise ist hierbei zwischen der Außenfläche 26 des Hülsenteils 25 und der gegenüberliegenden Innenfläche der Spannhülse 8 nur ein relativ schmaler Spalt vorhanden, wobei die auf die Zugelemente 6 wirkenden Reibungskräfte noch erhöht werden.

Der Winkel dieser weiteren Umlenkung um das hintere Ende des Hülsenteils 25 beträgt mehr als 120°, vorzugsweise mehr als 150°.

Eine Klemmung der Zugelemente 6 in ihrem der Umlenkung um das vordere Ende des Klemmglieds 14 folgenden Verlauf könnte auch in anderer Weise als beim gezeigten Ausführungsbeispiel erfolgen. Beispielsweise könnten die Klemmung auch an der Stelle der weiteren Umlenkung, und zwar zwischen dem hinteren Ende des Hülsenteils 25 und dem nach außen reichenden Vorsprung 27 des Klemmglieds 14 erfolgen. Auch eine Klemmung zwischen dem Hülsenteil 25 und der Spannhülse 8 wäre denkbar und möglich, beispielsweise wenn das Hülsenteil 25 längsgeschlitzt ausgebildet ist und/oder eine im Längsschnitt gesehen geneigte Außenfläche aufweist, die mit einer gleichsinnig geneigten Innenfläche der Spannhülse 8 zusammenwirkt.

Zur Montage der Steckeranordnung auf dem Kabel 1 wird zunächst die Spannhülse 8 mit der an ihrem hinteren Ende angebrachten Kabeltülle 28, die als Knickschutz für das Kabel 1 dient, vom vorderen Ende des gerade abgeschnittenen Kabels her auf dieses aufgeschoben. In der Folge wird ein vorderer Abschnitt des Kabelmantels 2 über eine Länge a entfernt, wie dies in Fig. 2 dargestellt ist (in den Fig. 2 bis 4 sind der Übersichtlichkeit halber Zugelemente nur in einem mehr oder weniger großen Teil des Umfangs dargestellt, während tatsächlich über den gesamten Umfang solche Zugelemente 6 vorhanden sind). Weiters werden die Schalenteile 15, 16 des Klemmgliedes 14 auf den Kabelmantel 2 im Bereich seines vorderen Endes aufgesetzt (Fig. 3). Das Klemmglied 14 wird in der Folge in das Hülsenteil 25 eingeschoben, wobei die Kabeladern 3 durch dieses hindurchgeführt werden und sich die Zugelemente 6 quasi "von selbst" um das vordere Ende des Klemmglieds 14 umlegen (in Fig. 3 ist ein in Fig. 3 oben dargestellter Teil der Zugelemente in diesem umgelegten Zustand dargestellt). Der in das Hülsenteil 25 eingeschobenen Zustand ist in Fig. 4 dargestellt (wobei wiederum nur ein in Fig. 4 oben liegender Teil der Zugelemente eingezeichnet ist). Die elektrischen Leiter 4 der an ihren vorderen Enden abisolierten Kabeladern 3 werden spätestens jetzt durch das Fenster 30 im Einsatz 12 an die hinteren Enden der elektrischen Kontaktelemente 13 angelötet. In der Folge wird die Spannhülse 8 über das Klemmglied 14 und das Hülsenteil 25 aufgeschoben, wobei sich die Zugelemente um das hintere Ende des Hülsenteils 25 umlegen (die sich dann ergebende Lage der Zugelemente ist in Fig. 5 zur Verdeutlichung bereits vor dem Aufschieben der Spannhülse 8 dargestellt). Die Spannhülse 8 wird auf das vordere Gehäuseteil 7 aufgeschraubt, wodurch die Teile wie beschrieben miteinander verspannt werden. Der Einsatz 12 stützt sich hierbei gegen eine Verschiebung nach vorne an einen nach innen reichenden Vorsprung 29 des vorderen Gehäuseteils 7 ab.

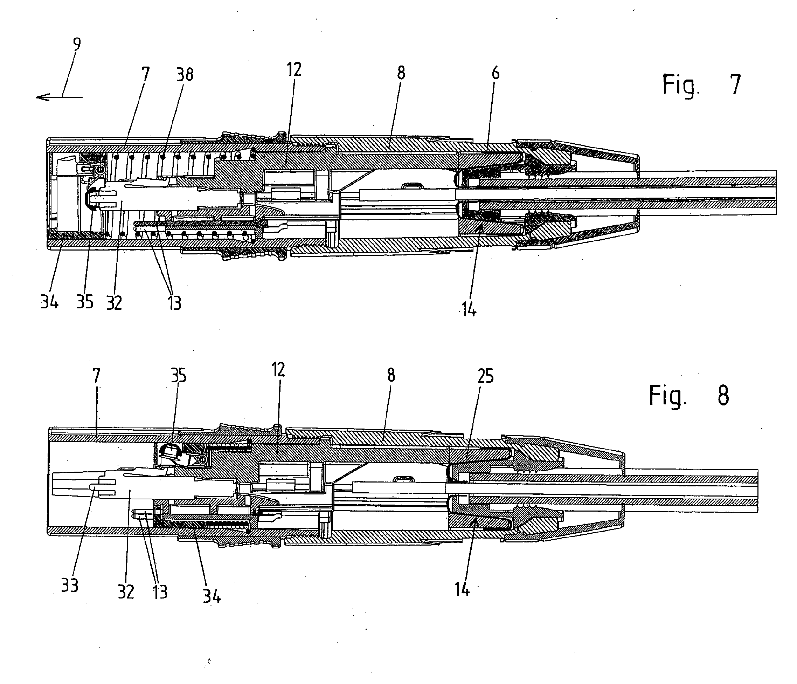

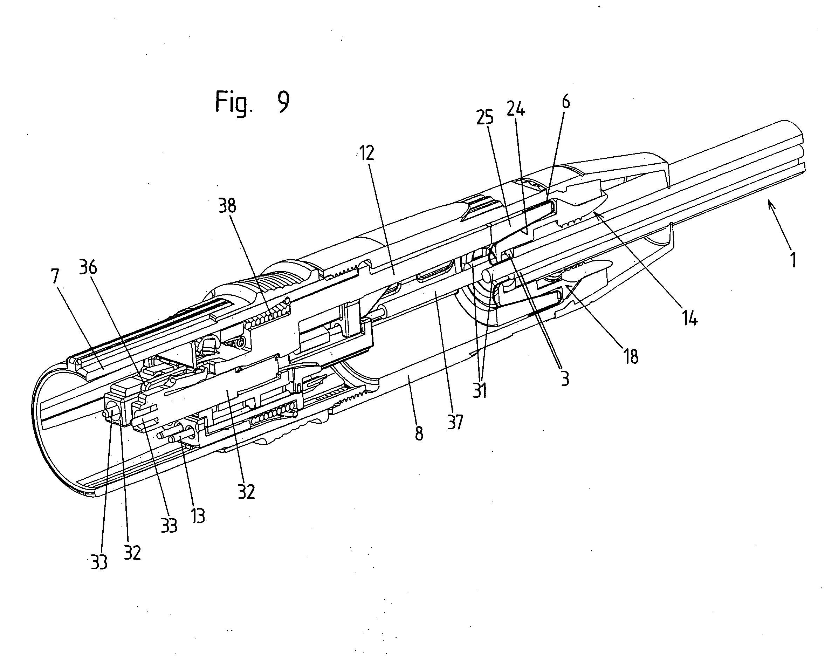

Beim Ausführungsbeispiel gemäß den Fig. 7 bis 9 ist die Steckeranordnung als Hybridstecker ausgebildet, d. h. sie dient sowohl für die Herstellung einer optischen als auch für die Herstellung von elektrischen Verbindungen und das Kabel 1 weist sowohl elektrische Leiter aufweisende Kabeladern 3 als auch Lichtleiter aufweisende Kabeladern 31 auf (die Kabeladern sind in den Fig. 7 bis 9 der Übersichtlichkeit halber im Bereich des Endes des Kabelmantels 2 abgeschnitten dargestellt). Zur Herstellung von optischen Kontakten trägt die Steckeranordnung mit den optischen Kabeladern 31 verbundene Innenstecker 32, die in herkömmlicher Weise Ferrulen 33 aufweisen, durch die die Lichtleiter bis zu deren stirnseitigen Enden geführt sind. Die Innenstecker 32 können beispielsweise als herkömmliche LC-Stecker ausgebildet sein. Diese Innenstecker 32 sind zwischen zwei Teilen des Einsatzes 12 fixiert. Der Einsatz 12 trägt neben diesen optischen Kontaktelementen weiters wiederum elektrische Kontaktelemente 13. Die Steckeranordnung weist weiters ein Verschiebeteil 34 auf. Beim Einstecken in ein nicht dargestelltes Steckeraufnahmeteil der Steckverbindung wird das Verschiebeteil 34 von der in Fig. 7 dargestellten vorderen Verschiebeposition gegen die Kraft einer Feder 38 in die in Fig. 8 dargestellte hintere Verschiebeposition verschoben, wodurch sich eine am Verschiebeteil verschwenkbar gelagerte Abdeckklappe 35 nach oben verschwenkt (indem ein Schubelement 36 des Einsatzes gegen sie anfährt). Am hinteren Ende des Einsatzes 12 ist wiederum einstückig mit diesem ein Hülsenteil 25 angebracht. Dieses, das Klemmglied 14 und die Spannhülse 8, welche wiederum auf das hintere Ende des vorderen Gehäuseteils 7 aufgeschraubt ist, sind in gleicher Weise wie beim zuvor beschriebenen Ausführungsbeispiel ausgebildet, wodurch sich eine gleiche Funktion der Zugentlastungseinrichtung ergibt.

Die Zugelemente 6 werden auch bei diesem Hybridkabel gemäß den Fig. 7 bis 9 von durchgehenden Fasern oder Fäden gebildet.

Dieses Hybridkabel weist weiters ein Stoßelement 37 zum Schutz der optischen Kabeladern 31 gegen ein zu starkes Abknicken auf, welches einen von einer Isolierung umgebenen harten Kern aufweist, auf den ein Crimpteil 39 aufgecrimpt ist, welches in achsialer Richtung gegen eine zu große Verschiebung durch den Einsatz 12 gesichert ist. Auch andere Arten der Sicherung des Stoßelements gegen eine achsiale Verschiebung sind denkbar und möglich, z.B. eine Befestigung mit einer Klemmschraube.

Unterschiedliche weitere Modifikationen als die bereits genannten gegenüber den gezeigten Ausführungsbeispielen sind denkbar und möglich, ohne den Bereich der Erfindung zu verlassen. So könnte beispielsweise eine andere Verbindung der Spannhülse 8 mit dem vorderen Gehäuseteil 7 als eine Schraubverbindung vorgesehen sein, beispielsweise mittels Spannhebeln. Die Erfindung eignet sich auch für andere zugverstärkte Kabel, bei denen die flexiblen Zugelemente beispielsweise von Drähten oder von Litzen eines geflochtenen Kabelschirms gebildet werden. Nach Abisolierung des Endes des Kabelmantels werden die Litzen des Kabelschirms auseinandergezogen und in analoger Weise wie bei den gezeigten Ausführungsbeispielen mindestens einmal umgelenkt und in einem an die erste Umlenkung folgenden Abschnitt an mindestens einer Stelle geklemmt.

### Legende zu den Hinweisziffern:

- 1: Kabel
- 2: Kabelmantel
- 3: Kabelader
- 4: elektrischer Leiter
- 5: Isolierung
- 6: Zugelement
- 7: vorderes Gehäuseteil
- 8: Spannhülse
- 9: Einsteckrichtung
- 10: Ende
- 11: zentrale Längsachse
- 12: Einsatz
- 13: elektrisches Kontaktelemen
- 14: Klemmglied
- 15: Schalenteil
- 16: Schalenteil
- 17: äußere Spannfläche
- 18: innere Spannfläche
- 19: Innengewinde
- 20: Außengewinde
- 21: Vorsprung
- 22: vorderes Ende
- 23: vordere Außenfläche
- 24: Innenfläche
- 25: Hülsenteil
- 26: Außenfläche
- 27: Vorsprung
- 28: Kabeltülle
- 29: Vorsprung
- 30: Fenster
- 31: Kabelader
- 32: Innenstecker
- 33: Ferrule
- 34: Verschiebeteil
- 35: Abdeckklappe
- 36: Schubelement
- 37: Stoßelement
- 38: Feder
- 39: Crimpteil

## Patentansprüche

1. An einem zugverstärkten Kabel (1), welches innerhalb eines Kabelmantels (2) mindestens eine Kabelader (3) sowie Zugelemente (6) aufweist, montierte Steckeranordnung mit einem ein vorderes Gehäuseteil (7) und eine Spannhülse (8), die mit dem vorderen Gehäuseteil (7) verbunden ist, umfassenden Gehäuse, in das ein Einsatz (12) eingesetzt ist, wobei die Steckeranordnung eine Zugentlastungseinrichtung umfasst, die mit den Zugelementen (6) des Kabels (1) zusammenwirkt, **dadurch gekennzeichnet, dass** die Steckeranordnung ein auf den Kabelmantel (2) aufgesetztes Klemmglied (14) aufweist, welches eine im Längsschnitt der Steckeranordnung gesehen zur zentralen Längsachse (11) des Gehäuses geneigte äußere Spannfläche (17) aufweist, die mit einer im Längsschnitt der Steckeranordnung gesehen gleichsinnig zur zentralen Längsachse (11) des Gehäuses geneigten inneren Spannfläche (18) der Spannhülse (8) zur Anpressung des Klemmgliedes (14) an den Kabelmantel (2) zusammenwirkt, und dass die aus dem Ende des Kabelmantels (2) herausstehenden Zugelemente (6) des Kabels (1) um das vordere Ende des Klemmgliedes (14) umgelegt sind und sich anschließend an diese Umlenkung entlang einer vorderen Außenfläche (23) des Klemmgliedes (14) nach hinten erstrecken, wobei die Zugelemente (6) in einem auf die Umlenkung um das vordere Ende des Klemmgliedes (14) folgenden Abschnitt ihres Verlaufs zumindest an einer Stelle zwischen zwei Teilen der Steckeranordnung geklemmt sind.

2. An einem zugverstärkten Kabel montierte Steckeranordnung nach Anspruch 1, **dadurch gekennzeichnet, dass** die Zugelemente (6) des Kabels (1) anschließend an ihre Umlenkung um das vordere Ende des Klemmglieds (14) zwischen der vorderen Außenfläche (23) des Klemmglieds (14) und einer Innenfläche (24) eines innerhalb des Gehäuses angeordneten Hülsenteils (25) verlaufen.

3. An einem zugverstärkten Kabel montierte Steckeranordnung nach Anspruch 2, **dadurch gekennzeichnet, dass** die Zugelemente (6) anschließend an ihren Verlauf zwischen der vorderen Außenfläche (23) des Klemmglieds (14) und der Innenfläche (24) des Hülsenteils (25) um das hintere Ende des Hülsenteils (25) umgelegt sind und sich anschließend an diese weitere Umlenkung entlang einer Außenfläche (26) des Hülsenteils (25) nach vorne erstrecken.

4. An einem zugverstärkten Kabel montierte Steckeranordnung nach Anspruch 3, **dadurch gekennzeichnet, dass** die Zugelemente (6) des Kabels anschließend an ihre weitere Umlenkung um das hintere Ende des Hülsenteils (25) zwischen der Außenfläche (26) des Hülsenteils (25) und der Spannhülse (8) verlaufen.

5. An einem zugverstärkten Kabel montierte Steckeranordnung nach einem der Ansprüche 1 bis 4, **dadurch gekennzeichnet, dass** die vordere Außenfläche (23) des Klemmglieds im Längsschnitt der Steckeranordnung gesehen zumindest abschnittsweise zur zentralen Längsachse (11) des Gehäuses geneigt ist, wobei die vordere Außenfläche (23) am vorderen Ende des geneigten Abschnitts näher bei der zentralen Längsachse (11) liegt als an ihrem hinteren Ende, und die Innenfläche (24) des Hülsenteils im Längsschnitt der Steckeranordnung gesehen zumindest abschnittsweise gleichsinnig zur zentralen Längsachse (11) geneigt ist, wobei vorzugsweise die Neigungswinkel einander entsprechen, und die Zugelemente (6) zwischen der vorderen Außenfläche (23) des Klemmglieds (14) und der Innenfläche (24) des Hülsenteils (25) geklemmt sind.

6. An einem zugverstärkten Kabel montierte Steckeranordnung nach einem der Ansprüche 2 bis 5, **dadurch gekennzeichnet, dass** das Hülsenteil (25) einstückig mit dem die Kontaktelemente (13) tragenden Einsatz (12) ausgebildet ist.

7. An einem zugverstärkten Kabel montierte Steckeranordnung nach einem der Ansprüche 1 bis 6, **dadurch gekennzeichnet, dass** das Klemmglied (14) zumindest in einem hinteren Bereich zumindest zwei in Längsrichtung getrennte und in Umfangsrichtung aufeinanderfolgende Abschnitte aufweist.

8. An einem zugverstärkten Kabel montierte Steckeranordnung nach einem der Ansprüche 1 bis 7, **dadurch gekennzeichnet, dass** das Klemmglied (14) zum Aufsetzen auf den Kabelmantel (2) umfänglich öffenbar ist.

9. An einem zugverstärkten Kabel montierte Steckeranordnung nach einem der Ansprüche 1 bis 8, **dadurch gekennzeichnet, dass** das Klemmglied (14) mindestens zwei separate Schalenteile (15, 16) aufweist, die von verschiedenen Seiten her auf den Kabelmantel (2) aufgesetzt sind.

10. An einem zugverstärkten Kabel montierte Steckeranordnung nach einem der Ansprüche 1 bis 9, **dadurch gekennzeichnet, dass** das Klemmglied (14) an seiner Innenfläche nach innen gerichtete Vorsprünge (21) zum Eindrücken in den Kabelmantel (2) aufweist.

11. An einem zugverstärkten Kabel montierte Steckeranordnung nach einem der Ansprüche 1 bis 10, **dadurch gekennzeichnet, dass** die äußere Spannfläche (17) des Klemmglieds (14) einen Außenkonus bildet und die innere Spannfläche (18) der Spannhülse (8) einen Innenkonus bildet.

12. An einem zugverstärkten Kabel montierte Steckeranordnung nach einem der Ansprüche 5 bis 11, **dadurch gekennzeichnet, dass** die vordere Außenfläche (23) des Klemmglieds (14) in ihrem zur zentralen Längsachse (11) geneigten Abschnitt einen Außenkonus und die Innenfläche (24) des Hülsenteils (25) in ihrem zur Längsachse geneigten Abschnitt einen Innenkonus bildet.

13. An einem zugverstärkten Kabel montierte Steckeranordnung nach einem der Ansprüche 1 bis 12, **dadurch gekennzeichnet, dass** die Zugelemente (6) Fasern oder Fäden sind.

14. An einem zugverstärkten Kabel montierte Steckeranordnung nach einem der Ansprüche 1 bis 12, **dadurch gekennzeichnet, dass** die Zugelemente (6) Litzen oder Bänder eines aufgetrennten Kabelschirms sind.

15. An einem zugverstärkten Kabel montierte Steckeranordnung nach einem der Ansprüche 1 bis 14, **dadurch gekennzeichnet, dass** die Steckeranordnung einen elektrischen Kabelstecker bildet.

16. An einem zugverstärkten Kabel montierte Steckeranordnung nach einem der Ansprüche 1 bis 14, **dadurch gekennzeichnet, dass** das Kabel (1) mindestens einen Lichtleiter aufweist und die Steckeranordnung einen optischen Steckverbinder bildet.

17. An einem zugverstärkten Kabel montierte Steckeranordnung nach einem der Ansprüche 1 bis 14, **dadurch gekennzeichnet, dass** das Kabel (1) sowohl elektrische Leiter als auch Lichtleiter umfasst und die Steckeranordnung einen Hybridstecker bildet.

18. An einem zugverstärkten Kabel montierte Steckeranordnung nach einem der Ansprüche 1 bis 17, **dadurch gekennzeichnet, dass** das Klemmglied (14) den Kabelmantel (2) zumindest um seinen halben Umfang umgibt.

19. An einem zugverstärkten Kabel montierte Steckeranordnung nach einem der Ansprüche 1 bis 18, **dadurch gekennzeichnet, dass** die Zugelemente (6) zwischen dem Kabelmantel (2) und der mindestens einen Kabelader (3) verlaufen und die eine oder mehreren Kabeladern (3) in ihrer Gesamtheit vollständig umgeben.

20. An einem zugverstärkten Kabel montierte Steckeranordnung nach einem der Ansprüche 1 bis 19, **dadurch gekennzeichnet, dass** das Klemmglied (14) im vorderen Endbereich des Kabelmantels (2) auf diesen aufgesetzt ist.

21. An einem zugverstärkten Kabel montierte Steckeranordnung nach einem der Ansprüche 1 bis 20, **dadurch gekennzeichnet, dass** der Winkel der Umlenkung der Zugelemente (6) um das vordere Ende des Klemmgliedes (14) mehr als 120°, vorzugsweise mehr als 150° beträgt.

22. An einem zugverstärkten Kabel montierte Steckeranordnung nach einem der Ansprüche 3 bis 21, **dadurch gekennzeichnet, dass** der Winkel der weiteren Umlenkung um das hintere Ende des Hülsenteils mehr als 120°, vorzugsweise mehr als 150° beträgt.
